# FASCICULE DE BREVET EUROPEEN

(11) **EP 0 721 758 B1**
(45) Date de publication et mention de la délivrance du brevet: **15.04.1998**
(21) Numéro de dépôt: 96400062.4
(22) Date de dépôt: 11.01.1996
(51) Int. Cl.: A47J 37/12, A47J 36/10

(54) **Dispositif de verrouillage-déverrouillage d'un couvercle d'un appareil de cuisson, notamment d'une friteuse**
Verriegelungs-Entriegelungsvorrichtung für dem Deckel eines Kochgerätes, insbesondere eines Fritiergerätes
Device for locking-unlocking the lid of a cooking vessel, in particular of a fryer

(30) Priorité: 12.01.1995 FR 9500324
(43) Date de publication de la demande: 17.07.1996
(73) Titulaire: MOULINEX S.A., 75008 Paris (FR)
(72) Inventeur: Bois, Bernard M., F-14000 Caen (FR); Collas, Guy, F-14123 Ifs (FR); Legoubin, Joel, F-14120 Mondeville (FR)
(74) Mandataire: Busquets, Jean-Pierre

(56) Documents cités:
- EP-A- 0 543 750
- FR-A- 2 658 162

## Description

La présente invention se rapporte à un dispositif de verrouillage-déverrouillage du couvercle d'un appareil de cuisson, notamment d'une friteuse, par rapport à son boîtier externe formant carrosserie, comportant au moins un verrou comprenant un corps qui est monté mobile dans l'épaisseur de la paroi frontale du boîtier, qui est pourvu dans sa partie supérieure d'un doigt d'accrochage faisant saillie hors du bord supérieur du boîtier, qui est monté élastiquement dans une position stable de verrouillage dans laquelle ledit doigt d'accrochage vient en prise avec un organe d'appui, de profil adapté, solidaire du couvercle, et qui est susceptible d'être déplacé par un mécanisme d'actionnement assujetti à un organe de manoeuvre manuelle pour venir occuper une position instable de déverrouillage.

On connaît des appareils de cuisson, tels que des friteuses, ayant un couvercle à relevage automatique en étant monté articulé en face arrière du boîtier, et comprenant un dispositif de verrouillage-déverrouillage du couvercle du type mentionné ci-dessus, tel que celui décrit dans le document EP-A-543 750, dans lequel le corps du verrou est monté pivotant, dans l'épaisseur de la paroi frontale du boîtier, autour d'un axe de pivotement qui est parallèle à la paroi frontale du boîtier, permettant ainsi un déplacement transversal - basculement d'avant en arrière et inversement - du doigt d'accrochage par rapport à la paroi frontale du boitier lors du verrouillage et du déverrouillage du couvercle. Or, il s'avère qu'au cours de chaque phase de cuisson, le couvercle en position de fermeture verrouillée est toujours sujet à une certaine dilatation thermique, de sorte qu'avec un tel montage du corps du verrou, il peut arriver que l'organe d'appui lié au couvercle finisse par se désolidariser du doigt d'accrochage après de nombreux cycles thermiques de cuisson, d'où le risque de déverrouillage et donc d'ouverture du couvercle en phase de cuisson, avec les conséquences fâcheuses qui en résultent.

L'invention a notamment pour but de supprimer ce risque et de réaliser d'une manière simple un dispositif de verrouillage-déverrouillage, du type exposé ci-dessus, qui garantisse dans le temps une sécurité absolue dans le verrouillage du couvercle lors de chaque cycle de cuisson.

Selon l'invention, le corps du verrou est agencé dans la paroi frontale du boîtier de manière à permettre un déplacement latéral du doigt d'accrochage par rapport à ladite paroi frontale du boîtier lors du déplacement dudit corps vers sa position de déverrouillage, et l'organe d'appui s'étend transversalement de part et d'autre du doigt d'accrochage lorsque celui-ci vient en prise avec ledit organe d'appui dans la position de verrouillage du corps.

Ainsi, par ce déplacement latéral, et non plus transversal comme dans l'art antérieur, du doigt d'accrochage par rapport à la paroi frontale du boîtier, on comprend qu'en cas de dilatation thermique du couvercle pendant la cuisson, le doigt d'accrochage suit l'organe d'appui en restant en permanence en prise avec ce dernier, assurant ainsi continûment et d'une manière efficace un verrouillage du couvercle au cours de nombreux cycles thermiques de cuisson.

Dans une réalisation préférentielle de l'invention faisant intervenir un corps du verrou qui est monté pivotant autour d'un axe solidaire du boîtier, l'axe de pivotement dudit corps est sensiblement orthogonal à la paroi frontale du boîtier.

Selon une autre caractéristique avantageuse de l'invention, le dispositif de verrouillage-déverrouillage comporte deux verrous qui sont agencés symétriquement par rapport à un axe vertical passant sensiblement par le milieu de la paroi frontale du boîtier, dont les doigts d'accrochage respectifs sont orientés en regard l'un de l'autre, et dont les corps respectifs sont sollicités simultanément, par suite d'une manoeuvre manuelle, par le mécanisme d'actionnement pour venir occuper leurs positions respectives de déverrouillage par déplacement en sens inverse l'un de l'autre.

Ce positionnement particulier des deux verrous avec leurs doigts d'accrochage en vis-à-vis permet, d'une part, d'assurer un auto-centrage du couvercle lors de sa fermeture, et d'autre part, d'obtenir une excellente répartition du verrouillage sur le couvercle, conduisant ainsi à une parfaite stabilité du couvercle en position de fermeture verrouillée, et ce sans déformation mécanique du couvercle, telle qu'un gauchissement de celui-ci.

Les caractéristiques et avantages de l'invention ressortiront d'ailleurs de la description qui va suivre, à titre d'exemple non limitatif, en référence aux dessins annexés dans lesquels :
- la figure 1 est une vue schématique en perspective d'une friteuse équipée d'un dispositif de verrouillage-déverrouillage selon l'invention ;
- la figure 2 est une vue partielle et agrandie en coupe verticale du dispositif de verrouillage-déverrouillage, montrant le dispositif en position de verrouillage ;
- la figure 3 est une vue identique à celle de la figure 2, mais montrant le dispositif en position de déverrouillage ;
- la figure 4 est une vue partielle en perspective d'un doigt d'accrochage coopérant avec un organe d'appui ; et
- la figure 5 est une vue en perspective d'un bouton-poussoir à deux doigts d'actionnement du dispositif de verrouillage-déverrouillage des figures 2 et 3.

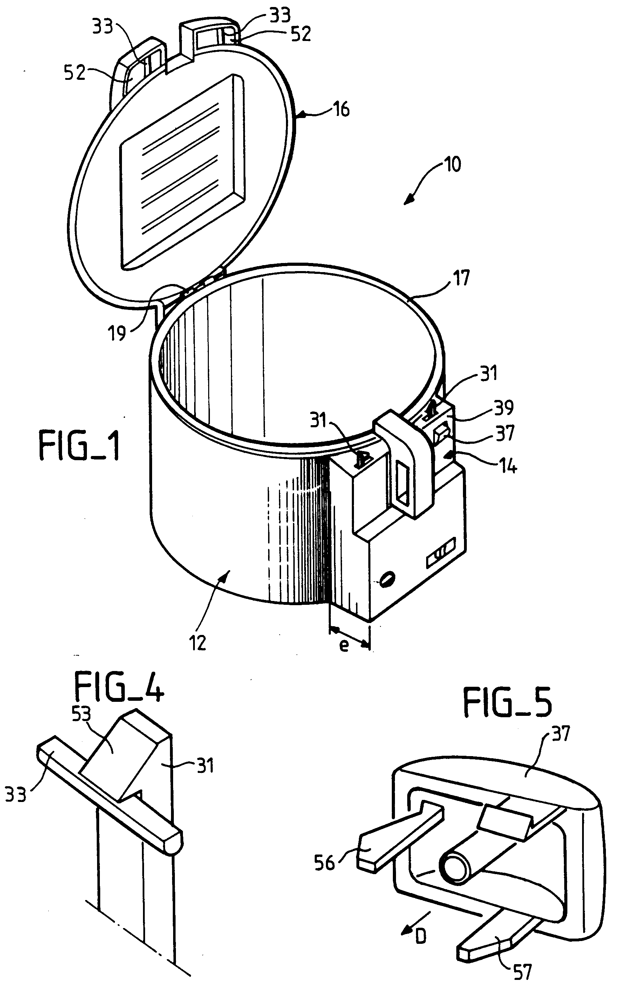

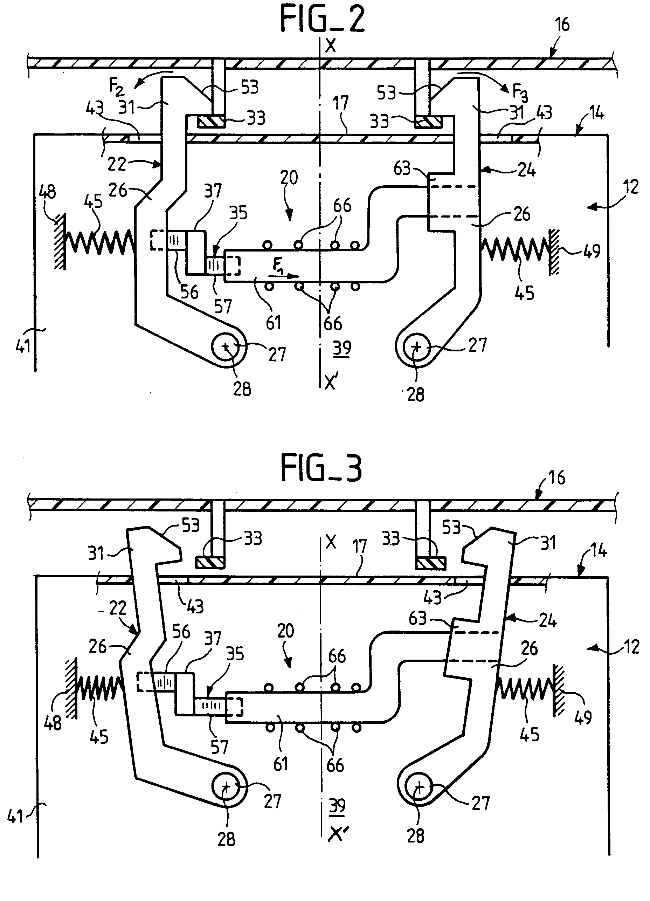

L'appareil de cuisson 10 illustré schématiquement à la figure 1 est une friteuse ménagère, par exemple de forme générale ronde, comportant un boîtier externe formant carrosserie 12 qui présente une partie frontale ou façade formant une avancée 14, d'épaisseur e, et constituant en soi un tableau de commande, un couvercle 16 monté articulé à pivotement, de préférence de façon amovible, sur le bord supérieur 17 du boîtier 12, à l'arrière de celui-ci, par un moyen d'articulation 19, ainsi qu'un dispositif de verrouillage-déverrouillage conforme à l'invention, désigné par la référence globale 20 aux figures 2 et 3, logé dans l'épaisseur e de la partie frontale 14 du boîtier, et destiné à assurer le verrouillage et le déverrouillage du couvercle 16 sur le boîtier 12 de la friteuse comme on le décrira par la suite.

D'une manière connue en soi, le moyen d'articulation 19 du couvercle sur le boîtier est constitué par une charnière à laquelle est associé un dispositif (non figuré) de relevage automatique du couvercle 16 permettant de faire passer le couvercle d'une position de fermeture verrouillée à une position d'ouverture.

Dans l'exemple de réalisation préféré illustré aux figures 2 et 3, le dispositif de verrouillage-déverrouillage 20 comporte deux verrous 22, respectivement 24, comprenant chacun un corps 26 qui est monté pivotant, dans l'épaisseur e de la partie frontale 14 du boîtier 12, sur un palier 27 d'axe 28 solidaire du boîtier 12 et orthogonal à la paroi frontale de celui-ci, qui est pourvu dans sa partie supérieure d'un doigt d'accrochage 31 faisant saillie vers le haut et hors du bord supérieur 17 du boîtier 12 comme on le voit mieux à la figure 1, qui est monté élastiquement dans une position stable de verrouillage (figure 2) dans laquelle son doigt d'accrochage 31 vient coopérer avec un organe d'appui 33, de profil adapté, solidaire du couvercle 16, et qui est susceptible par pivotement d'occuper une position instable de déverrouillage (figure 3) en étant sollicité, pour son pivotement, par un mécanisme d'actionnement, désigné globalement en 35 sur les figures 2 et 3, qui est commun aux deux verrous 22 et 24 et qui est assujetti à un organe de manoeuvre manuelle 37 mieux visible à la figure 5.

Selon l'invention, et comme le montrent les figures 2 et 3, le corps 26 de chacun des deux verrous 22 et 24 est agencé dans la partie frontale 14 du boîtier 12 de manière à permettre un déplacement latéral - basculement de droite à gauche et inversement - du doigt d'accrochage correspondant 31 par rapport à la paroi frontale 39 du boîtier 12 lors du pivotement dudit corps 26, et chaque organe d'appui 33 solidaire du couvercle 16 est adapté à être engagé en permanence avec le doigt d'accrochage correspondant 31 lorsque le corps 26 de chaque verrou est dans sa position de verrouillage.

Suivant une autre caractéristique de l'invention, les deux verrous 22 et 24, figures 2 et 3, sont agencés symétriquement par rapport à un axe vertical XX' passant sensiblement par le milieu de la paroi frontale 39 du boîtier, et les deux doigts d'accrochage respectifs 31 des deux verrous sont orientés en regard l'un de l'autre ; les deux corps respectifs 26 des deux verrous viennent alors occuper chacun leur position de déverrouillage, sous l'action simultanée du mécanisme d'actionnement 35 commandé par l'organe de manoeuvre manuelle 37, en effectuant un pivotement en sens inverse l'un de l'autre.

Cette disposition symétrique des deux verrous 22 et 24, et cette orientation en vis-à-vis des deux doigts d'accrochage respectifs 31 des deux verrous, permettent avantageusement d'assurer un auto-centrage du couvercle 16 lors de sa fermeture, et d'obtenir une parfaite stabilité, sans déformation mécanique du type gauchissement, du couvercle 16 en position de fermeture verrouillée. Cet auto-centrage du couvercle est également facilité par la présence d'une pente pratiquée sur chaque doigt 31 de manière à obtenir un engagement du type conique entre les deux pentes respectives des deux doigts 31 et les deux organes d'appui correspondants 33.

Dans cet exemple, figures 2 et 3, le corps 26 de chacun des deux verrous 22 et 24 est constitué par un levier qui s'étend dans le sens vertical le long de la paroi frontale 39 du boîtier 12, dont l'extrémité inférieure est montée pivotante sur le palier 27 d'axe orthogonal 28 fixé sur la face interne 41 de la paroi frontale 39 du boîtier, et dont l'extrémité supérieure constitue le doigt d'accrochage 31 conformé présentement en un crochet traversant une lumière de débattement 43 ménagée dans le bord supérieur 17 du boîtier. Le levier 26 de chacun des deux verrous 22 et 24 est lié à une extrémité d'un ressort de compression 45, l'autre extrémité du ressort 45 étant solidaire d'une surface d'appui 48, respective-ment 49, formée dans le boîtier 12.

Comme le montre la figure 1, chacun des deux organes d'appui 33 est constitué en l'occurrence par un barreau qui est monté transversalement dans une cavité cloisonnée 52 faisant partie intégrante du couvercle 16, et qui présente une longueur telle qu'il s'étend de part et d'autre du crochet correspondant 31 lorsque le nez 53 de ce dernier vient en prise avec le barreau 33, comme montré à la figure 4, dans la position de verrouillage du couvercle 16. Ainsi, en cas de dilatation thermique du couvercle 16 pendant la phase de cuisson, et ce plus particulièrement dans le sens radial, le crochet 31 est soumis à un léger glissement sur le barreau 33 tout en restant en permanence engagé avec ce dernier.

Dans un mode d'exécution illustré aux figures 2, 3 et 5, l'organe de manoeuvre manuelle 37 est un bouton-poussoir monté dans la paroi frontale 39 du boîtier (figure 1), en un emplacement proche du levier 26 du verrou 22, tandis que le mécanisme d'actionnement 35 comporte deux doigts d'actionnement 56,57 formant chacun une came, qui sont solidaires du bouton-poussoir 37 en s'étendant chacun dans une direction parallèle à la direction de déplacement D du bouton-poussoir 37 comme visible à la figure 5, dont l'un (56) est destiné à venir coopérer, lors d'une manoeuvre manuelle, avec une rampe appropriée (non figurée) formée sur le levier 26 du verrou 22 pour entraîner un pivotement de ce levier 26 visant à le déverrouiller, et dont l'autre (57) est destiné à venir coopérer, également lors d'une manoeuvre manuelle, avec une rampe appropriée (non figurée) formée en une extrémité d'une tringle plate 61 montée coulissante le long de la face interne 41 de la paroi frontale 39, suivant une direction perpendiculaire à l'axe XX', pour entraîner un coulissement de la tringle 61. L'autre extrémité de la tringle 61 est disposée en appui contre la face postérieure du levier 26 de l'autre verrou 24 par passage dans un évidement de débattement 63 pratiqué dans ce levier 26 de façon à entraîner, par suite du coulissement de la tringle 61, un pivotement de cet autre levier 26 visant également à le déverrouiller.

Le bouton-poussoir 37 et les deux doigts d'actionnement formant cames 56 et 57 sont réalisés, de préférence, en une seule pièce moulée en une matière plastique telle que, par exemple, le polypropylène.

Sur les figures 2 et 3, on a représenté en 66 des pions fixes montés sur la face interne 41 de la paroi frontale 39 du boîtier, disposés le long des bords supérieur et inférieur de la tringle 61, et servant de guides pour le coulissement de la tringle 61.

En regard des figures 2 et 3, le fonctionnement du dispositif de verrouillage-déverrouillage conforme à l'invention est le suivant.

En considérant le dispositif dans sa position de verrouillage montrée à la figure 2, l'utilisateur appuie sur le bouton-poussoir 37 de telle sorte que la came 57 s'engage sur la rampe de la tringle 61 pour faire coulisser celle-ci dans le sens de la flèche F₁ (figure 2). Lors du coulissement de la tringle 61, la came 56 est engagée sur la rampe du levier 26 du verrou 22 pour faire pivoter celui-ci en sens antihoraire (flèche F₂), à l'encontre de la force de rappel du ressort correspondant 45, et simultanément, la tringle coulissante 61 en appui sur le levier 26 du verrou 24 fait pivoter celui-ci en sens horaire (flèche F₃), à l'encontre de la force de rappel du ressort correspondant 45. Au cours du pivotement des deux leviers 26, chaque crochet 31 libère progressivement l'organe d'appui associé 33 du couvercle 16 pour venir occuper sa position instable de déverrouillage montrée à la figure 3. Dans cette position, le couvercle 16 est complètement déverrouillé et s'ouvre automatiquement grâce au dispositif de relevage automatique.

Dès que l'utilisateur relâche sa pression sur le bouton-poussoir 37 après ouverture du couvercle 16, les deux leviers respectifs 26 des deux verrous 22 et 24 reviennent par pivotement dans leur position initiale sous l'action de leurs ressorts de rappel respectifs 45, ainsi que la tringle 61 par coulissement sous l'action du levier 26 du verrou 24 lors du pivotement de celui-ci, repoussant ainsi le bouton-poussoir 37 vers sa position initiale.

Lorsque l'utilisateur souhaite maintenant fermer le couvercle 16, il abaisse celui-ci et chacun des deux organes d'appui 33 du couvercle s'engage sur le nez 53 du crochet correspondant 31 et fait pivoter le levier correspondant 26 du verrou, à l'encontre de la force de rappel du ressort associé 45, dans le sens antihoraire (flèche F₂) pour le levier du verrou 22 et dans le sens horaire (flèche F₃) pour le levier du verrou 24. En fin de course du couvercle 16, les deux leviers respectifs 26 des deux verrous 22 et 24 reviennent par pivotement dans leur position initiale sous l'action de leurs ressorts de rappel respectifs 45, ainsi que la tringle 61 par coulissement sous l'action du levier 26 du verrou 24, et chaque crochet 31 vient alors en prise avec l'organe d'appui associé 33 du couvercle 16 pour venir occuper sa position stable de verrouillage montrée à la figure 2.

## Revendications

1. Dispositif de verrouillage-déverrouillage du couvercle (16) d'un appareil de cuisson, notamment d'une friteuse, par rapport à son boîtier externe formant carrosserie (12), comportant au moins un verrou (22;24) comprenant un corps (26) qui est monté mobile dans l'épaisseur de la paroi frontale (39) du boîtier (12), qui est pourvu dans sa partie supérieure d'un doigt d'accrochage (31) faisant saillie hors du bord supérieur (17) du boîtier (12), qui est monté élastiquement dans une position stable de verrouillage dans laquelle ledit doigt d'accrochage (31) vient en prise avec un organe d'appui (33), de profil adapté, solidaire du couvercle (16), et qui est susceptible d'être déplacé par un mécanisme d'actionnement (35) assujetti à un organe de manoeuvre manuelle (37) pour venir occuper une position instable de déverrouillage,
**caractérisé en ce que** le corps (26) du verrou (22;24) est agencé dans la paroi frontale (39) du boîtier (12) de manière à permettre un déplacement latéral du doigt d'accrochage (31) par rapport à ladite paroi frontale (39) du boîtier lors du déplacement dudit corps (26) vers sa position de déverrouillage, et l'organe d'appui (33) s'étend transversalement de part et d'autre du doigt d'accrochage (31) lorsque celui-ci vient en prise avec ledit organe d'appui (33) dans la position de verrouillage du corps (26).

2. Dispositif selon la revendication 1, dans lequel le corps (26) du verrou (22;24) est monté pivotant autour d'un axe (28) solidaire du boîtier,
**caractérisé en ce que** ledit axe de pivotement (28) du corps (26) du verrou (22;24) est sensiblement orthogonal à la paroi frontale (39) du boîtier (12).

3. Dispositif selon la revendication 1 ou 2,
**caractérisé en ce qu'**il comporte deux verrous (22,24) qui sont agencés symétriquement par rapport à un axe vertical (XX') passant sensiblement par le milieu de la paroi frontale (39) du boîtier (12), dont les doigts d'accrochage respectifs (31) sont orientés en regard l'un de l'autre, et dont les corps respectifs (26) sont sollicités simultanément, par suite d'une manoeuvre manuelle, par le mécanisme d'actionnement (35) pour venir occuper leurs positions respectives de déverrouillage par déplacement en sens inverse l'un de l'autre.

4. Dispositif selon la revendication 2 ou 3,
**caractérisé en ce que** le corps (26) du ou de chaque verrou (22;24) est constitué par un levier qui s'étend dans le sens vertical le long de la paroi frontale (39) du boitier (12), dont l'extrémité inférieure est montée sur ledit axe de pivotement (28), lequel est fixé sur la face interne (41) de la paroi frontale (39) du boîtier, et dont l'extrémité supérieure est conformée en un crochet (31) constituant ledit doigt d'accrochage et traversant une lumière de débattement (43) ménagée dans le bord supérieur (17) du boîtier (12), ledit levier (26) étant maintenu en position de verrouillage par un ressort de rappel (45).

5. Dispositif selon les revendications 2, 3 et 4,
**caractérisé en ce que** l'organe de manoeuvre manuelle (37) étant un bouton-poussoir monté dans la paroi frontale (39) du boîtier (12), en un emplacement proche de l'un des deux leviers (26), le mécanisme (35) d'actionnement des deux leviers comprend un premier doigt d'actionnement formant une première came (56) qui est solidaire du bouton-poussoir (37) en s'étendant dans une direction parallèle à la direction de déplacement dudit bouton-poussoir, et qui vient coopérer lors d'une manoeuvre manuelle avec une première rampe appropriée formée sur le levier (26) situé à proximité du bouton-poussoir (37) pour entraîner un pivotement de ce levier (26) visant à le déverrouiller, à l'encontre de la force de rappel du ressort (45) qui lui est associé, une tringle plate (61) qui est montée coulissante dans la paroi frontale (39) du boîtier (12) en s'étendant dans une direction de coulissement transversale à l'axe vertical (XX') passant par le milieu de ladite paroi frontale du boîtier, dont une extrémité est en appui contre l'autre levier (26) et dont l'autre extrémité présente une seconde rampe, et un second doigt d'actionnement formant une seconde came (57) qui est également solidaire du bouton-poussoir (37) en s'étendant dans une direction parallèle à la direction de déplacement dudit bouton-poussoir, et qui vient coopérer lors d'une manoeuvre manuelle avec ladite seconde rampe appropriée de la tringle (61) pour entraîner un coulissement de ladite tringle, laquelle provoque alors un pivotement de l'autre levier (26) visant à le déverrouiller, à l'encontre de la force de rappel du ressort (45) qui lui est associé.

6. Dispositif selon la revendication 5,
**caractérisé en ce que** la tringle (61) est appliquée à plat contre la face interne (41) de la paroi frontale (39) du boîtier (12), et des moyens de guidage (66) sont prévus sur cette face interne (41) de la paroi frontale (39) du boîtier pour guider ladite tringle (61) lors de son coulissement.

7. Dispositif selon la revendication 5 ou 6,
**caractérisé en ce que** le bouton-poussoir (37) et les premier (56) et second (57) doigts d'actionnement sont réalisés d'une seule pièce en matière plastique.

8. Dispositif selon l'une quelconque des revendications précédentes,
**caractérisé en ce que** l'organe d'appui (33) solidaire du couvercle (16) est constitué par un barreau.

9. Appareil de cuisson, notamment une friteuse, comportant un dispositif de verrouillage-déverrouillage (20) conforme à l'une quelconque des revendications 1 à 8.

## Claims

1. Device for locking-unlocking the lid (16) of a cooking vessel, in particular of a fryer, with respect to its external casing forming a shell (12), having at least one lock (22 ; 24) comprising a body (26) which is movably mounted in the thickness of the front wall (39) of the casing (12), which is provided in its top part with a hooking finger (31) projecting outside the top edge (17) of the casing (12), which is mounted elastically in a stable locking position in which said hooking finger (31) engages with a bearing member (33), with an adapted profile, fixed to the lid (16), and which is able to be moved by an actuating mechanism (35) controlled by a manual operating member (37) so as to occupy an unstable unlocking position,
**characterised in that** the body (26) of the lock (22 ; 24) is arranged in the front wall (39) of the casing (12) so as to permit a lateral movement of the hooking finger (31) with respect to said front wall (39) of the casing during the movement of said body (26) towards its unlocking position, and the bearing member (33) extends transversally on each side of the hooking finger (31) when the latter engages with said bearing member (33) in the position of locking of the body (26).

2. Device according to claim 1, in which the body (26) of the lock (22 ; 24) is mounted so as to pivot about a shaft (28) fixed to the casing,
**characterised in that** said pivot shaft (28) of the body (26) of the lock (22 ; 24) is substantially orthogonal to the front wall (39) of the casing (12).

3. Device according to claim 1 or 2,
**characterised in that** it has two locks (22, 24) which are arranged symmetrically with respect to a vertical axis (XX') passing substantially through the middle of the front wall (39) of the casing (12), whose respective hooking fingers (31) are oriented opposite each other, and whose respective bodies (26) are simultaneously driven, through a manual operation, by the actuating mechanism (35) so as to occupy their respective unlocking positions by moving in opposite directions to one another.

4. Device according to claim 2 or 3,
**characterised in that** the body (26) of the lock or each lock (22 ; 24) is formed by a lever which extends in the vertical direction along the front wall (39) of the casing (12), whose bottom end is mounted on said pivot shaft (28), which is fixed on the internal face (41) of the front wall (39) of the casing, and whose top end is formed in a hook (31) constituting said hooking finger and passing through a clearance hole (43) formed in the top edge (17) of the casing (12), said lever (26) being held in the locking position by a return spring (45).

5. Device according to claims 2, 3 and 4,
**characterised in that**, the manual operating member (37) being a push button mounted in the front wall (39) of the casing (12), at a location close to one of the two levers (26), the mechanism (35) for actuating the two levers comprises a first actuating finger forming a first cam (56) which is fixed to the push button (37), extending in a direction parallel to the direction of movement of said push button, and which cooperates during a manual operation with a first suitable ramp formed on the lever (26) situated close to the push button (37) to cause a pivoting of this lever (26) designed to unlock it, against the return force of the spring (45) associated with it, a flat rod (61) which is slidably mounted in the front wall (39) of the casing (12) extending in a sliding direction transverse to the vertical axis (XX') passing through the middle of said front wall of the casing, one end of which bears on the other lever (26) and the other end of which has a second ramp, and a second actuating finger forming a second cam (57) which is also fixed to the push button (37), extending in a direction parallel to the direction of movement of said push button, and which cooperates during a manual operation with said second suitable ramp of the rod (61) to cause a sliding of said rod, which then leads to a pivoting of the other lever (26) designed to unlock it, against the return force of the spring (45) associated with it.

6. Device according to claim 5,
**characterised in that** the rod (61) is applied flat against the internal face (41) of the front wall (39) of the casing (12), and guiding means (66) are provided on this internal face (41) of the front wall (39) of the casing to guide said rod (61) during its sliding.

7. Device according to claim 5 or 6,
**characterised in that** the push button (37) and the first (56) and second (57) actuating fingers are produced of a single piece from plastic.

8. Device according to any one of the preceding claims,
**characterised in that** the bearing member (33) fixed to the lid (16) is formed by a bar.

9. Cooking vessel, particularly a fryer, having a locking-unlocking device (20) in accordance with any one of claims 1 to 8.

## Patentansprüche

1. Verriegelungs-Entriegelungsvorrichtung für den Deckel (16) eines Kochgerätes, besonders einer Friteuse, bezüglich seines äußeren einen Rahmen bildenden Gehäuses (12), die mindestens einen Riegel (22; 24) mit einem Körper (26) aufweist, der in der Dicke der Frontwand (39) des Gehäuses (12) beweglich montiert ist, in seinem oberen Bereich mit einem Einhakfinger (31) ausgestattet ist, der über den oberen Rand (17) des Gehäuses (12) hervorsteht, elastisch in einer stabilen Verriegelungsposition gehalten ist, in welcher der Einhakfinger (31) an einem Halteelement (33) mit passendem Profil angreift, das am Deckel (16) befestigt ist, und von einem Aktiverungsmechanismus (35) verschoben werden kann, der abhängig ist von einem manuell betätigbaren Element (37),um eine instabile Entriegelungsposition einzunehmen, **dadurch gekennzeichnet, daß** der Körper (26) des Riegels (22; 24) in der Frontwand (39) des Gehäuses so angeordnet ist, daß er eine seitliche Verschiebung des Einhakfingers (31) bezüglich der Frontwand (39) des Gehäuses ermöglicht, wenn der Körper (26) in seine Entriegelungsposition gebracht wird, und daß das Halteelement (33) sich quer auf beiden Seiten des Einhakfingers (31) erstreckt, wenn dieser in der Verriegelungsstellung des Körpers (26) am Halteelement (33) angreift.

2. Vorrichtung nach Anspruch 1, in welcher der Körper (26) des Reges (22; 24) schwenkbar um eine am Gehäuse befestigte Achse (28) montiert ist, **dadurch gekennzeichnet, daß** die Schwenkachse (28) des Körpers (26) des Riegels (22; 24) im wesentlichen rechtwinklig zur Frontwand (39) des Gehäuses (12) ist.

3. Vorrichtung nach Anspruch 1 oder 2, **dadurch gekennzeichnet, daß** sie zwei Riegel (22, 24) aufweist, die symmetrisch bezüglich einer vertikalen Achse (XX') angeordnet sind, welche im wesentlichen durch die Mitte der Frontwand (39) des Gehäuses (12) geht, deren jeweilige Einhakfinger (31) einander zugewandt gerichtet sind, und deren jeweilige Körper (26) durch eine manuelle Betätigung gleichzeitig vom Aktivierungsmechanismus (35) beaufschlagt werden, so daß sie ihre jeweilige Entriegelungsstellung durch Bewegung jeweils in die entgegengesetzte Richtung einnehmen.

4. Vorrichtung nach Anspruch 2 oder 3, **dadurch gekennzeichnet, daß** der Körper (26) des oder jedes Reges (22;24) durch einen Hebel gebildet ist, der sich vertikal entlang der Frontwand (39) des Gehäuses (12) erstreckt, dessen unteres Ende an der Schwenkachse (28) befestigt ist, die an der Innenseite (41) der Frontwand (39) des Gehäuses befestigt ist, und dessen oberes Ende zu einem Haken (31) geformt ist, der den Einhakfinger bildet und eine im oberen Rand (17) des Gehäuses (12) ausgebildete Öffnung (43) durchsetzt, wobei der Hebel (26) durch eine Rückstellfeder (45) in der Verriegelungsstellung gehalten wird.

5. Vorrichtung nach den Ansprüchen 2, 3 und 4, **dadurch gekennzeichnet, daß** das manuelle Betätigungselement (37) ein in der Frontwand (39) des Gehäuses (12) nahe einem der beiden Hebel (26) angeordneter Druckknopf ist, und daß der Aktivierungsmechanismus (35) der beiden Hebel einen ersten Aktivierungsfinger aufweist, der eine erste Nocke (56) bildet, die fest mit dem Druckknopf (37) verbunden ist, wobei er sich in einer zur Verschiebungsrichtung des Druckknopfes parallelen Richtung erstreckt, und der bei manueller Betätigung mit einer ersten passenden Rampe am Hebel (26) zusammenwirkt, der nahe dem Druckknopf (37) angeordnet ist, um eine Schwenkung dieses Hebels (26) zur Entriegelung gegen die Kraft der zu ihm gehörenden Feder (45) zu bewirken, eine flache Metallstange (61), die verschiebbar in der Frontwand (39) des Gehäuses (12) angeordnet ist und sich in eine Verschiebungsrichtung quer zur vertikalen Achse (XX') erstreckt, die durch die Mitte der Frontwand des Gehäuses verläuft, deren eines Ende gegen den anderen Hebel (26) drückt und deren anderes Ende eine zweite Rampe aufweist, und einen zweiten Aktivierungsfinger aufweist, der eine zweite Nocke (57) bildet, die ebenfalls fest mit dem Druckknopf (37) verbunden ist, wobei er sich in einer zur Verschiebungsrichtung des Druckknopfes parallelen Richtung erstreckt, und der bei manueller Betätigung mit der zweiten passenden Rampe der Metallstange (61) zusammenwirkt, um eine Verschiebung der Metallstange zu bewirken, die dann zur Entriegelung eine Schwenkung des anderen Hebels (26) gegen die Kraft der zu ihm gehörenden Feder (45) verursacht.

6. Vorrichtung nach Anspruch 5, **dadurch gekennzeichnet, daß** die Metallstange (61) flach gegen die Innenseite (41) der Frontwand (39) des Gehäuses (12) anliegt und daß Führungselemente (66) auf dieser Innenseite (41) der Frontwand (39) des Gehäuses vorgesehen sind, um die Metallstange (61) bei ihrer Verschiebung zu führen.

7. Vorrichtung nach Anspruch 5 oder 6, **dadurch gekennzeichnet, daß** der Druckknopf (37) und der erste (56) und zweite (57) Aktivierungsfinger aus einem Stück und aus Kunststoffmaterial hergestellt sind.

8. Vorrichtung nach einem der vorhergehenden Ansprüche, **dadurch gekennzeichnet, daß** das am Deckel (16) befestigte Halteelement (33) durch einen Balken gebildet ist.

9. Kochgerät, besonders Friteuse, welche eine Verriegelungs-Entriegelungsvorrichtung (20) nach einem der Ansprüche 1 bis 8 aufweist.
